# EUROPEAN PATENT APPLICATION

(11) **EP 1 528 079 A1**
(43) Date of publication of application: **04.05.2005**
(21) Application number: 03425714.7
(22) Date of filing: 03.11.2003
(51) Int. Cl.: C08J 9/12

(54) **Polylactic acid-based degradable foams and process for their production**

(71) Applicant: COOPBOX EUROPE S.P.A., 42100 Reggio Emilia (IT)
(72) Inventor: Vannini, Cesare, 40127 Bologna (IT); Fiordelisi, Fabio, 42100 Reggio Emilia (IT); Movilli, Walter, 42020 S. Polo d' Enza (RE) (IT); Lanzani, Federico, 25020 azzano Mella (BS) (IT)
(74) Representative: Gislon, Gabriele

(57) **Abstract**

Degradable foamed lactic acid (co)polymer products, such as trays and containers in general, are produced by the extrusion of the (co)polymers in the presence of a foaming agent selected from nitrogen, carbon dioxide and mixtures thereof, at a temperature within the range of Tₘ+ 10°C and Tₘ-30°C, where Tₘ is the melting temperature of the (co)polymer.

## Description

The present invention relates to degradable polylactic acid (PLA) based foams and to a process for their production.

More particularly, the invention relates to products obtained by foaming polymers or co-polymers of lactic acid (PLA), such as sheets, trays, containers in general, cups and the like, used for packaging in general and in particular for food packaging, as well as to their production by means of an innovative process.

The above mentioned containers, particularly cups and trays, are largely used in everyday life; they are usually made of foamed plastics, whereby light products are obtained, having very good mechanical characteristics, which are equivalent to or better than those of the non-foamed containers, despite having lower weight and thus using a smaller amount of raw material.

These containers have some drawbacks. Due to the very large use thereof, and in view of the high volume to weight ratio, a solution for the disposal of used containers, which are not as easily recyclable as other types of plastics products such as bottles and containers, must be urgently found.

In order to solve the disposal problem of the containers, it was suggested to replace the plastics materials currently used for producing foamed containers, with lactic acid polymers; indeed, depending on the conditions, products based on polylactic acid (PLA) degrade in a substantially complete manner, into CO₂ and water, within a time of few weeks to about a year.

Furthermore, containers made of foamed plastic materials are not suited as such for some applications: e.g. the trays used for meat should absorb the exuded liquids to prevent meat from sitting in the exuded liquids. Accordingly, trays made of foamed polystyrene, which are laminated to have an inner layer of absorbent cellulose, not visible from the outside, sandwiched between two layers of polystyrene have been proposed; in addition, the inner layer of polystyrene is perforated in order to allow the passage of liquids into the cellulose layer.

EP1329299 describes the use of specific fillers, including glass microspheres, to have an "open" polystyrene structure and to allow the exuded liquid to penetrate into the interstitial spaces of the tray shaped foamed product; this technique however requires the use of surfactant products in order to make hydrophilic the surface of the tray, which is in itself normally hydrophobic, and allow the exuded liquid to reach the inside of the laminate or penetrate into the cavities of the foamed product. These solutions have therefore shown themselves to be expensive. Furthermore, the presence of organic liquids within the structures of the containers following their use, makes their recycling difficult.

Rigid and non-foamed PLA based containers, mainly used as containers for fruit and vegetables, are known. These containers are however more expensive than those traditionally used.

EP-B-0507554 describes a manufacturing process for polymers of lactic acid or copolymers of lactic acid and hydroxycarboxylic acids. The polymerisation of the lactic acid occurs, for example, through the opening of the lactide ring in the presence of catalysts. The polymers are extrusion foamed, using chemical foaming agents such as azodicarbonamide, azobisisobutyronitrile and the like. Evaporation foaming agents, selected from hydrocarbons and halogenated hydrocarbons such as butane, chloroform and chlorofluorohydrocarbons are also disclosed. This technique has the drawbacks of requiring the use of foaming gases deriving from chemical substances which decompose during the extrusion process or of a gas foaming by evaporation such as hydrocarbons or chlorofluorohydrocarbons, i.e. obtained from non-renewable sources.

EP-B-0510999 describes a PLA based polymer which, according to the patent, can be foamed into an open cell sheet if it is mixed with plasticisers and the extruded sheet is stretched after its extrusion. The resulting product is however poorly suitable to be used as a food container because it does not have the required physical and mechanical characteristics. In fact, it is suggested for use as an absorbing medium for oil and for exuded liquids, such as a filter in ventilation systems, and as a wrapping around the roots of plants. Accordingly, said invention relates to a "polymer network" and hence not to a "foam" having a cell structure capable of maintaining the mechanical performances sufficient to make a container such as a food tray.

It is an aim of the present invention to solve the above mentioned drawbacks and obtain foamed sheets of lactic acid (co)polymers with good physical and mechanical characteristics.

Another aim of the invention is to provide a manufacturing process for foamed sheets which is simple, reliable, economical and environmentally friendly. A further aim is to make PLA or lactic acid co-polymers food containers having performances close to or matching those of the known containers made of foamed plastics, and in particular which have good resistance to mechanical deformation during storage and packaging.

Such aims are achieved by means of the present invention which relates to a manufacturing process for foamed lactic acid (co)polymers by extrusion in the presence of a foaming agent, characterised in that said foaming agent is selected from nitrogen and carbon dioxide, and mixtures thereof.

According to one aspect of the invention, the process envisages heating said lactic acid (co)polymers to a temperature sufficient for their melting, feeding and mixing said foaming agents with the molten (co)polymer, cooling the foaming agent and (co)polymer mixture to a temperature within the range of Tₘ+10°C and Tₘ-30°C, wherein Tₘ is the melting temperature of said (co)polymer, and extruding the thus cooled mixture so as to form a sheet. Tₘ is the value measured at the apex of the melting peak obtained by a DSC (Differential Scanning Calorimeter) under a constant flow of nitrogen and by heating at a rate of 20°C/min. Preferably, the cooling step is at a temperature within the range of Tₘ+5°C and Tₘ-7°C.

According to one preferred aspect of the invention, the foaming agent consists of a nitrogen and carbon dioxide mixture, and the ratio of N₂ and CO₂ is set as a function of the degree of expansion and of the percent of open cells required for the final sheet: by increasing the percent of CO₂ the percent of open cells within the structure is increased, and its density is reduced.

According to a further aspect of the invention, the process also comprises a thermoforming step of the sheet in order to obtain trays or other products. In this step, a thermal treatment of the polymer may be carried out, to improve its mechanical properties and in particular its resistance to heat deformation at temperatures higher than 50°C, and generally up to at least 60°C.

The product obtained by the process of the invention is new with respect to the prior art. In fact it makes no use of chemical foaming agents or chlorofluorohydrocarbons in that the agents used for foaming the product are only nitrogen, carbon dioxide or mixtures thereof, and the agents still present within the product as residues from the foaming process, are only such gases.

Therefore, it is an object of the invention a foamed product of lactic acid (co)polymers such as may be obtained by a process according to that described above.

This product preferably has a percent of open cells, which depends on the quantity of CO₂ used in the foaming mixture, which may reach 90%. A preferred embodiment of the product are trays for food packaging, in particular trays having a majority of closed cells for packaging dry food or food that does not release liquids, and trays having a majority of open cells for packaging food such as meat or fish, i.e. that releases serum or liquids. In trays for the packaging of meats or fish, an open cell percent of around 70-80% is desired.

The invention provides many advantages with respect to the known art.

By using nitrogen and carbon dioxide, either alone or in combination, foamed polymers and the relevant containers formed therefrom have been obtained, surprisingly having mechanical characteristics which are comparable with those of the products in foamed plastics and superior to the mechanical characteristics of the rigid containers made from PLA and analogous (co)polymers of equal weight. Particularly, trays for use with meats may be obtained with the desired percent of open cells to ensure that any exuded liquids are absorbed; differently from the known art, incisions, sheet perforation or skin removal steps are not required when manufacturing the tray.

Furthermore, the invention allows avoiding both the use of wetting additives (such as for example surfactants) and the use of chemical or physical foaming agents based on hydrocarbons or halogenated hydrocarbons; therefore, such additives and foaming agents are absent (even as residues) in the foamed product, thus allowing the manufacture of a tray based only on degradable natural materials, and produced from renewable resources. The use of nitrogen and carbon dioxide gases additionally avoids having to provide the manufacturing plants with the safety equipment otherwise necessary when hydrocarbons or chlorofluorohydrocarbons are used as foaming agents.

This results in a substantial saving over the production costs and in products which are more inert with regard to the environment because the only foaming agents present in the foaming step are nitrogen and carbon dioxide (gases which are in the atmosphere). An additional advantage is that products with greater or lesser percents of open cells are obtained in a reproducible manner, as a function of the N₂ and CO₂ composition of the gas injected into the extruder.

Furthermore, by carrying out a thermal treatment of the sheet, a product with improved mechanical characteristics and less liable to deformation, even at temperatures greater than 60°C, is obtained.

Moreover, the foamed polymer manufacturing process according to the invention does not require the addition of any plasticisers and, in the case an open cell structure is necessary, this may be obtained without resorting to high stretching ratios, and hence without destroying the cellular structure.

The invention will now be disclosed in greater detail with reference to the drawings which are attached as non-limiting illustration, wherein:
- fig. 1 is a diagrammatic view of an extruder for the manufacture of foamed products according to the invention;

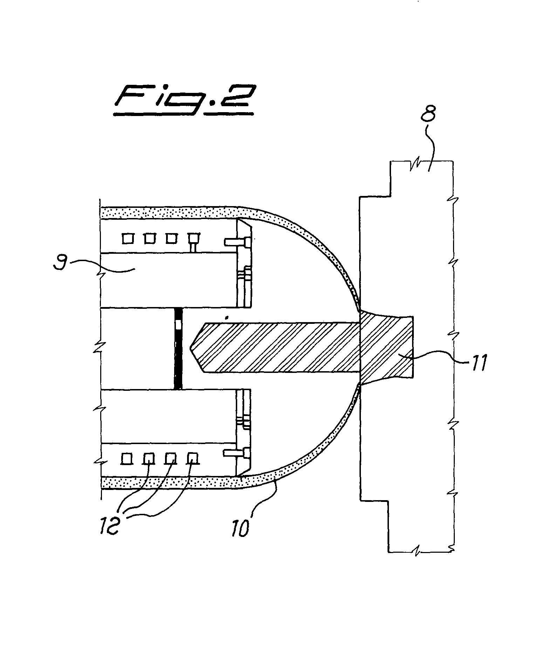

- fig. 2 is a partial and longitudinal sectional view of the extrusion head and the calibration mandrel;
- fig. 3 is a DSC graph of a foamed sheet of pure PLA; and
- fig. 4 is a DSC graph of a foamed sheet of PLA in the presence of a crystallising additive.

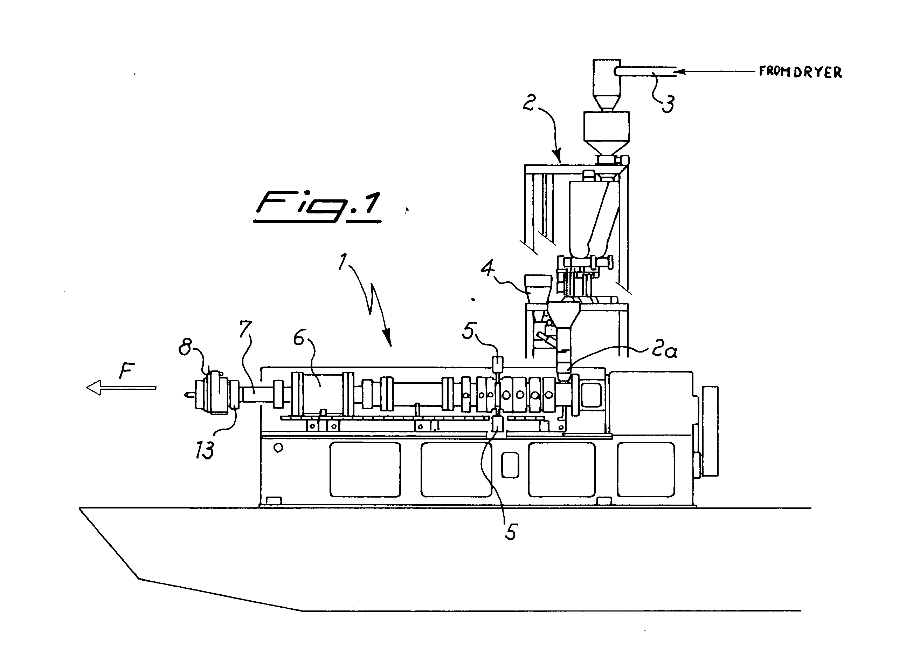

The extruder 1 shown in fig. 1 comprises a gravimetric feeding system 2 with which the PLA (co)polymer is weighed. The feeder 2 is connected by means of conduit 3 to a dryer (not shown) where the polymer is dried prior to its extrusion to avoid hydrolysis phenomena.

Suitable polymers are the homo- and co-polymers of lactic acid such as for example those described in the above cited documents EP-B-0507554 and EP-B-0510999 and in particular polymers with high molecular weight (Mn), preferably of at least 70,000 Daltons. Preferential polymers are those obtained by the formation of lactides and polymerisation thereof; as an example, a particularly suitable polymer is PLA 2002D grade produced by Cargill Dow with the trade name Nature Work.

An additional gravimetric feeding system 4 is used for optional additives. The extrusion barrel is equipped with heating means for the accurate and constant thermoregulation of the process; such means are for example oil regulation units and electrically heating strips; this allows the temperature to be precisely adjusted during the steps of the process: melting the PLA, injection of the physical foaming agent, mixing, cooling and expansion upon exit from the extrusion head.

Onto the extruding barrel are additionally provided, downstream of the feeding devices 2 and 4, means 5 for feeding, i.e. injecting, gas into the molten polymer. The means for feeding nitrogen comprise a pressure reducer to set the gas to a pressure of approx. 100 bar and a gauge and flow regulator; a pumping system which delivers liquid CO₂ at a pressure of approx. 100 bar is preferably used for the carbon dioxide. Liquid CO₂ may thus be injected.

Downstream of injection means 5 for the foaming gas, with respect to the direction of extrusion as shown by arrow F, there are positioned, in sequence, a heat exchanger 6, a static mixer 7, and an extrusion head 8.

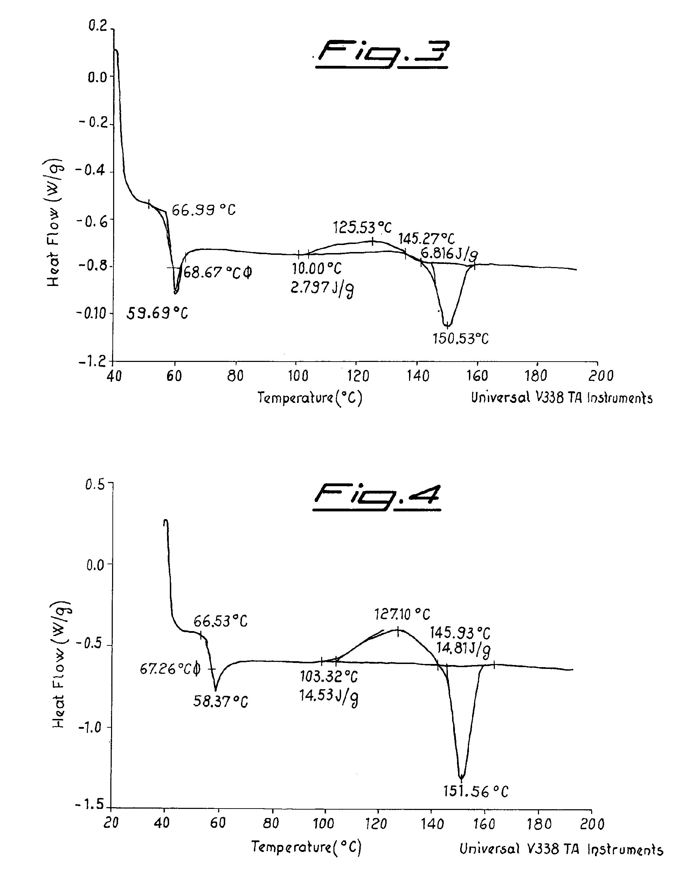

Fig. 3 schematically shows a detailed extrusion head 8 and the related calibration mandrel 9 on which the foamed tubular sheet 10 slides after delivery from head 8 in order to be calibrated and cooled. Head 8 is provided with an annular, i.e. circular, extrusion die 11; the profile of the extrusion die is sized in such a way as to allow a pressure drop only within its end, just before the exit, in order to prevent cells forming within the head.

The calibration mandrel 9 calibrates the sheet (which is tubular) upon its delivery from the extruder and cools it as quickly as possible in order to give consistency to the foamed product and in order to avoid a collapsing of the cellular structure. With that aim, the calibration mandrel 9 is provided with a coil or similar heat exchange means 12 in which water at 5-10°C is circulated in order to cool the surface of the mandrel to about the same temperature. The ratio from the diameter of the extrusion die and the diameter of the calibration mandrel is preferably comprised within the interval between 1:2 and 1:4. The calibration mandrel is positioned quite close to the exstrusion die so as to prevent the sheet from collapsing when leaving from the extrusion die. Said distance will be comprised within the range of 50 and 200 mm for a round headed extruder with an extrusion die of approx. 50-60 mm. The extruder used is known in the extrusion foaming art for such a purpose. For example a suitable extruder is a twin-screw extruder, with L/D ratio 20:1, screw diameter 90 mm.

The manufacturing process of the sheet of foamed PLA (co)polymer envisages the following steps:
a) heating the lactic acid (co)polymer to a temperature sufficient to melt it: this step is carried out in the first part of the barrel, which is located between inlet 2a of the feeding device to the barrel and the gas injection means 5, at a temperature that, in the case of PLA, is within the range of 150 to 200°C, preferably between 190 and 200°C and that more preferably is 190-195°C;
b) feeding by means 5 the foaming agent(s) to the molten (co)polymer: this step is carried out at a temperature which is close to that of the preceding step and in any case before the following cooling step;
c) cooling and maintaining the mixture of foaming agent and (co)polymer at a temperature comprised within the interval between Tₘ+10°C and Tₘ -30°C, wherein Tₘ is the melting temperature of said (co)polymer. Preferably the cooling temperature is within the range of Tₘ+5°C to Tₘ-10°C, and more preferably of Tₘ+5°C to Tₘ-7°C, wherein Tₘ is the melting temperature of the (co)polymer measured as the apex of the relative peak obtained by DSC under a constant flow of nitrogen and by heating at a rate of 20°C/min. In the case of PLA, Tₘ is 150°C and the temperature of the cooling area is within the range of 155 to 143°C; this step involves the extruder barrel area that goes from immediately downstream of injection means 5 and just upstream of extrusion head 8;
d) extruding the mixture to form a sheet 10 and
e) cooling the extruded sheet on calibration mandrel 9.

By following the above disclosed process, foamed sheets are obtained with good mechanical characteristics and a homogeneous cell distribution. The cells dimensions were found to be within the range of approx. 200 to approx. 600 microns, according to the extrusion parameters.

It was noticed that the percent of open cells within the final sheet may be controlled by using a mixture of the two foaming agents and by acting on the quantity of CO₂ present. More particularly, the quantity of N₂ used is comprised between 0.1 and 0.4% by weight over the total solids and the quantity of CO₂ used is comprised between 0.3 and 2.0% by weight over the total solids; it was observed that with only N₂ predominantly closed cells are obtained and with only CO₂ predominantly open cells and lower density are obtained.

The extruded tubular sheet is set and cooled on the calibration mandrel which, as mentioned previously, has a diameter of two to four times the diameter of the extrusion die, in order to slightly stretching the extruded product. The cooled sheet is then cut and rolled up in a known way and then thermoformed into the desired products.

The process additionally envisages the possibility of carrying out an additional thermal treatment step of the essentially amorphous foamed sheet obtained following extrusion, with the aim of increasing the resistance to heat deformation. Such a step is carried out in the thermoforming process.

Two ways to achieve this result have been identified.

In a first method a double mould is used wherein the first part is heated and the second is cooled. The sheet is shaped in the hot part and is subsequently transferred into the cold part for its stabilisation. The heating oven, which is 8 times the length of the forward step of the sheet, is maintained at a temperature within the range of 90 °C and 170°C, the hot mould is maintained at a temperature comprised within the interval between 100°C and 130 °C and the cycle time is comprised within the interval between 4 and 9 seconds. Preferably, the oven temperature is within the range of 150°C to 165°C, and more preferably of approx. 160°C. The heating temperature of the mould is close to that in which the crystallisation kinetics is maximal and in the case of polylactic acid is within the range of 100°C to 150°C and preferably of 125°C ± 5°C. The cycle time, *i*.*e*. the heating time in the hot mould, is within the range between 4 and 9 seconds and more preferably is 6 seconds and results in an at least partial crystallisation of the foamed product. The sheet thus treated and shaped, is then cooled and stabilized with the cold mould.

Alternatively, the sheet is heated only in the oven, to a temperature of abount 200°C, markedly higher than that used in a normal PLA thermoforming process, for a time that is sufficient to bring the sheet to a temperature that is close to that of crystallisation and is such as to allow at least partial crystallisation of the product; the treated sheet is then directly moulded in a cold mould.

In both methods, the use of crystallising agents such as Masterbatch NAS320-S manufactured by SUKANO, added to the raw materials, may be of some help in the extrusion process.

### Example

### 1. Extrusion.

A Dow Cargill polylactic acid polymer "Nature Work" grade 2002D and free from plasticisers, was fed to a twin screw extruder with L/D ratio 20:1, screw diameter 90 mm and throughput loading capacity 90Kg/h. The polymer was melted within the first part of the extruder maintained at 190-195°C; then, a mixture of nitrogen and carbon dioxide was added to the polymer, wherein the quantity of added nitrogen was calculated to be 0.15% by weight on the solids and the quantity of carbon dioxide was calculated to be 0.5% by weight on the solids. The polymer, added with the foaming agents, was subsequently cooled in the second part of the extruder maintained at 143°C and extruded with a circular extrusion die. The extruded tubular sheet was set and cooled on a calibration mandrel with a stretching ratio of 1:3.2 maintained at approx. 10°C and subsequently cut and wound up. A sheet having density 350 kg/m³ and a percent of open cells of 65% was obtained.

### 2. Extrusion.

A Dow Cargill polylactic acid polymer "Nature Work" grade 2002D and free from plasticisers, was fed to a twin screw extruder with L/D ratio 20:1, screw diameter 90 mm and throughput capacity 90Kg/h.

The polymer was melted within the first part of the extruder maintained at 190-195°C, nitrogen in a quantity equal to 0.15% by weight on the solids, was subsequently added to the polymer. The polymer, added with the foaming agent, was then cooled in the second part of the extruder maintained at 143°C and extruded with a circular extrusion die. The extruded tubular sheet was set and cooled on a calibration mandrel with a stretching ratio of 1:3.2 maintained at approx. 10°C and subsequently cut and wound up. A sheet having density 400 kg/m³ and a percent of open cells of less than 25% was obtained.

### 3. Thermoforming.

The sheet obtained in the above examples was thermoformed by heating in an oven at 160°C and then by shaping it in the heated part of a double mould, at a temperature of 125°C, for 6 seconds. The sheet shaped in the hot part was subsequently transferred to the cold part of the double mould for stabilisation.

The above example was repeated by varying the process parameters and in some cases adding a crystallising agent.

Several thermal treatment tests were carried out according to what above mentioned, and foamed PLA trays with optimal resistance to heat deformation were obtained. The deformation tests included the exposure of the thermally treated tray to a temperature of 55, 60, 65 and 70 °C in an oven for a time necessary to reach the equilibrium temperature, time fixed at two minutes. With the normal thermoforming process (oven temperature range within 100°C to 150°C and single cold mould) the maximum temperature the trays could be heated at without deformations was 55°C, whilst all the trays treated as above were found to be resistant to deformation at 60°C; following treatment in the hot mould at approx. 125°C for six seconds, trays resistant to deformation in an oven at 70°C were obtained.

Figures 3 and 4 show the DSC graphs of two foamed products. It is to be noted that one of the products has crystallisation and melting peaks (10 J/g, 13 J/g) that are markedly higher with respect to the other (3 J/g, 7 J/g); this shows that the presence of the crystallising agent, added as an additive, in this product considerably increases the crystallisation kinetics.

The trays obtained and provided with open cells, have shown themselves to be able to absorb the liquid released from the meat packaged in them. This property has been verified with a series of tests which have also taken into consideration the weight drop of the packaged product following the loss of serum, which has increased the weight of the tray and has been completely absorbed by the same.

An embodiment of the invention envisages laminating the tray with a film of PLA or equivalent non foamed (co)polymer; the film is applied to the outer side if the tray is intended to contain meat or an analogous product, the secretions of which must be absorbed by the open cell structure of the tray. The film applied to the inside will allow forming a barrier package by welding a PLA film to the tray.

## Claims

1. A process for the production of degradable foamed lactic acid (co)polymer based products, wherein said (co)polymers are foamed by extrusion in the presence of a foaming agent, **characterised in that** said foaming agent is selected from nitrogen, carbon dioxide and mixtures thereof.

2. The process according to claim 1, **characterised in that** it comprises the steps of: heating said lactic acid (co)polymers to a temperature sufficient to melt them, feeding to and mixing said foaming agent(s) with the molten (co)polymer, cooling the foaming agent and (co)polymer mixture to a temperature within the range of Tₘ+10°C and Tₘ-30°C, wherein Tₘ is the melting temperature of said (co)polymer, and extruding the mixture to form a sheet.

3. The process according to claim 1 or 2, wherein 0.1 to 0.4% nitrogen, by weight on the solids; 0.3 to 2% carbon dioxide, by weight on the solids; or mixtures thereof are used as foaming gas.

4. The process according to claim 1 or 2, **characterised in that** said (co)polymer is extruded from a circular extrusion die and the extruded sheet is cooled on circular cross section cooling mandrel placed in close proximity to said extrusion die.

5. The process according to any previous claim, furthermore comprising a thermoforming step of the foamed sheet, **characterised in that** said sheet is heated and shaped in a hot mould at a temperature within the range of 100 to 150 °C and with a cycle time within the range of 4 to 9 seconds and **in that** the thus treated sheet is shaped in a cold mould.

6. The process according to any previous claim, furthermore comprising a thermoforming step of the foamed sheet, **characterised in that** said sheet is heated in an oven at a temperature of 190-200°C and **in that** the thus treated sheet is shaped in a cold mould.

7. A product of foamed lactic acid (co)polymers as obtainable with a process according to any previous claim, **characterised in that** it comprises foaming agents or residues thereof, which are selected only from nitrogen, carbon dioxide and mixtures thereof.

8. The product according to claim 7, **characterised in that** it has a percent of open cells within the range of 10% to 90%.

9. The product according to claims 7 or 8, in the form of a tray, as obtainable according to the process of claims 5 or 6, **characterised in that** it is resistant to deformation at temperatures of at least 60°C.

10. The product according to any claim 7 to 9, **characterised in that** it comprises a layer of lactic acid (co)polymer film applied to at least a part thereof.

11. A plant for lactic acid (co)polymers extrusion foaming for carrying out the process according to any claim 1 to 6, comprising an extruder, means for feeding the polymers to be extruded and means for feeding the foaming agents, **characterised in that** said extruder has a circular extrusion die and that said means of supplying the foaming agents are means for supplying gaseous nitrogen, carbon dioxide and mixtures thereof.

12. A plant for thermoforming foamed products of lactic acid (co)polymers, **characterised in that** it comprises a double thermoforming mould wherein the first part is heated and the second is cooled.

13. The use of a plant according to claim 11 or claim 12 for the manufacture of foamed products of lactic acid (co)polymers.
